(19) Europäisches Patentamt
European Patent Office
Office européen des brevets

(11) **EP 2 237 149 B1**

(12) **EUROPEAN PATENT SPECIFICATION**

(45) Date of publication and mention
of the grant of the patent:
**12.06.2013 Bulletin 2013/24**

(51) Int Cl.:
***G06F 9/44*** *(2006.01)*      ***G05B 15/02*** *(2006.01)*
***G05B 19/042*** *(2006.01)*

(21) Application number: **09157093.7**

(22) Date of filing: **01.04.2009**

(54) **Binding templates**

Verbindungsvorlagen

Modèles de liaison

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**06.10.2010 Bulletin 2010/40**

(73) Proprietor: **Tac AB**
**213 75 Malmö (SE)**

(72) Inventors:
• **Grundelius, Mattias**
  **226 47 Lund (SE)**
• **Davidsson, Anders**
  **212 22 Malmö (SE)**
• **Fihnn, Daniel**
  **233 36 Svedala (SE)**
• **Andersson, Camilla**
  **246 25 Löddeköpinge (SE)**
• **Nobach, Diez**
  **212 21 Malmö (SE)**

(74) Representative: **Henriksson, Dan Ragnar Mikael**
**Awapatent AB**
**P.O. Box 5117**
**200 71 Malmö (SE)**

(56) References cited:
**WO-A1-01/25860       WO-A1-01/82072**
**DE-A1- 19 806 297**

• **FLORIJN G ET AL: "TOOL SUPPORT FOR OBJECT-ORIENTED PATTERNS" ECOOP. EUROPEAN CONFERENCE ON OBJECT-ORIENTED PROGRAMMING, XX, XX, 9 June 1997 (1997-06-09), pages 472-495, XP008024252**

**Description**

Technical Field

The present invention relates to the general field of building automation systems. Particularly the present invention relates to a method, an apparatus and a computer program for establishing data bindings between objects in building automation systems.

Background

A building automation system commonly comprises a plurality of field devices. In the building automation industry these field devices may be controlled by deploying a control system. The control system usually comprises a plurality of components in addition to the field devices, such as control programs and user interfaces. The components of the control system may be represented by computer implemented objects. These objects may be operatively connected by the use of so-called binding points. Moreover, the objects are commonly associated with a plurality of such binding points. It goes without saying that in order for the control system to function correctly the objects should be bound correctly. The objects may be bound manually, for example, by dragging and dropping binding points from a binding point browser to a binding points list in a user interface. The objects may also be bound by manually editing a binding points list comprising all data bindings in the system. The binding point list may in general provide information regarding the binding points of the objects, the unit of the binding points and which data bindings that are made to and from each binding point.

US patent 5,978,753 is related to automated configuration of smart sensors and actuators used in measurement and control systems. It discloses a method for initializing a distributed measurement and control system that establishes communication bindings based on context parameters measured or acquired by the nodes. As the smart sensor is connected to an existing system the automated configuration method allows for a plug-and-play like system wherein the smart sensor is enabled to automatically establish data bindings to other entities of the system. However, US patent 5,978,753 does not disclose how to provide an existing binding-less system with data bindings or how to alter already established data bindings.

WO 01/25860 A1 relates generally to data processing systems and, more particularly, to methods and systems for generating, applying, and defining patterns for software development. Methods and systems consistent with WO 01/25860 A1 provide an improved software development tool that overcomes the limitations of conventional software development tools. The software development tool of WO 01/25860 A1 generates a pattern instance to offer a tailored and documented pre-emptive solution to a common software design problem, applies a pattern to a portion of existing code to improve the design of existing code, and defines a user pattern from existing code to provide a developer with the capability to capture a proven pattern for reuse.

WO 01/82072 A1 relates to a method and system for developing software, and particularly to a method and system for generating source code in an object-oriented element to reflect an added link to another object-oriented element. The software development tool of WO 01/82072 A1 allows a developer to simultaneously view a graphical and a textual display of source code. The graphical and textual views are synchronizes so that a modification in one view is automatically reflected in the other view. In addition, the software development tool is designed for use with more than one programming language

Summary of the Invention

Since there may be a large number of object points to be bound the above binding processes may be rather cumbersome and error-prone. The present invention proposes to solve, or at least mitigate, the abovementioned problems by providing a binding tool for establishing data binding between objects. The binding tool may be embodied as a plurality of binding templates. Generally, the above objectives are achieved by a method, an apparatus, and a computer program product for establishing data bindings between objects in a building automation system, according to the attached independent claims.

According to a first aspect, the above objects are achieved by computer implemented method of establishing data bindings between objects in a building automation system, comprising specifying a source object of the objects, the source object being associated with source binding points; specifying a target object of the objects, the target object being associated with target binding points; providing a binding template relating to data bindings between the objects in the building automation system, wherein the binding template specifies how the source binding points are bound to the target binding points; generating, by applying the binding template on the source object and the target object, a binding point list comprising source binding point information and target binding point information pertaining to data bindings between the source bidning points and the target binding points; and applying the source binding point information by the source object and the target binding point information by the target object in the building automation system, thereby establishing a data binding between the source object and the target object.

The disclosed method thus enables an efficient tool for establishing data binding between objects by providing binding templates. The binding templates provide re-useable schemes for binding objects. The binding templates enable the time needed to configure the building automation system to be reduced. The binding templates may reduce errors pertaining to manually binding objects.

The method may further comprise denoting the binding template as a first binding template; and providing a second binding template, wherein at least one of the source binding points and the target binding points of the second binding template is different from the source binding points and the target binding points associated with the first binding template.

The method may thus enable more than one binding template to be applied to the same object.

The second binding template may comprise the first binding template and additions thereto. The additions may relate to further specifications of how binding points of the source binding points are bound to binding points of the target binding points.

The second binding template may thus provide more detailed information than the first binding template.

The method may further comprise consecutively applying the first and second binding templates. In a case of a conflicting rule of the rules in the first and the second binding templates the rule of the latest applied binding template may be applied.

Thus the second binding template may only overwrite bindings as specified in the second binding template; the remaining bindings as established by the first binding template may not be affected by the second binding template.

Each binding point may be associated with an address. The method may further comprise specifying the binding template by comparing addresses for the source binding points and the target binding points.

The binding template may comprise a number of partial path matching rules pertaining to identifier paths in the objects for the first set of binding points and the second set of binding points. The method may further comprise specifying the binding template by applying the number of partial path matching rules by comparing path matching between the source object and the target object. Each one of the path matching rules may includes at least one common identifier of the source object and the target object.

By relating to partial paths associated with the binding points the binding template may thus specify the binding point in a convenient manner.

The partial path may be associated with the address.

The target object may be associated with a folder comprising a plurality of additional target objects. The method may further comprise generating the binding point list for the additional target objects in the folder.

Thus only one target object may be specified in order for the binding template to be applied to a plurality of objects.

The path matching rules may comprise at least one wildcard operator. The path matching rules may comprise at least one path separator operator. The at least one path separator operator may, during the path matching, be excluded from the path matching rules comprising the at least one wildcard operator. The path matching rules may comprise at least one plain text element operator.

Thus the method allows for convenient editing of paths to be compared. By allowing operators to be used the paths to be searched may be formulated in a compact manner.

The method may further comprise associating each object in the building automation system with at least one object type; relating the source object to one of the at least one object type, denoted source object type; relating the target object to one of the at least one object type, denoted target object type; and specifying the binding template for binding the source object and the target object by specifying data bindings between binding points of the source object type and binding points of the target object type.

Thus the binding template may be based on the type of the object.

Each object may be associated with at least two different object types.

The binding template may specify bindings between one source object type and two target object types.

According to a second aspect there is provided an apparatus comprising circuitry configured to perform a method as disclosed above.

Thus, according to the second aspect, the above objects are achieved by an apparatus for establishing data bindings between objects in a building automation system, comprising circuitry for specifying a source object of the objects, the source object being associated with source binding points; circuitry for specifying a target object of the objects, the target object being associated with target binding points; circuitry for providing a binding template relating to data bindings between the objects in the building automation system, wherein the binding template specifies how the source binding points are bound to the target binding points; circuitry for generating, by applying the binding template on the source object and the target object, a binding point list comprising source binding point information and target binding point information pertaining to data bindings between the source bidning points and the target binding points; and circuitry for applying the source binding point information by the source object and the target binding point information by the target object in the building automation system, thereby establishing a data binding between the source object and the target object. The circuitry may be implemented as part of a processor.

According to a third aspect, the above objects are achieved by a computer program product comprising software instructions stored on a computer-readable medium, which when executed on a processor performs a method according the above. The computer-readable medium may be a computer memory. The computer-readable medium may be an optical disc, such as a CD record or a DVD record.

The second and third aspects may generally have the same features and advantages as the first aspect.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated. In the figures like references correspond to like elements.

Brief Description of the Drawings

Embodiments of the present invention will now be described, by way of example, with reference to the accompanying schematic drawings, in which

Fig. 1(a) is a schematic view of a system according to embodiments,
Fig. 1(b) is an illustration of a display view according to embodiments,
Fig. 1(c) is a schematic view of an apparatus according to embodiments,
Figs. 2(a)-2(b) are illustrations of objects and paths thereof,
Figs. 3(a)-3(b) are illustrations of objects and data bindings thereof,
Fig. 4 is an illustration of a display view according to embodiments,
Fig. 5 is a flowchart according to embodiments.

Detailed Description of Preferred Embodiments

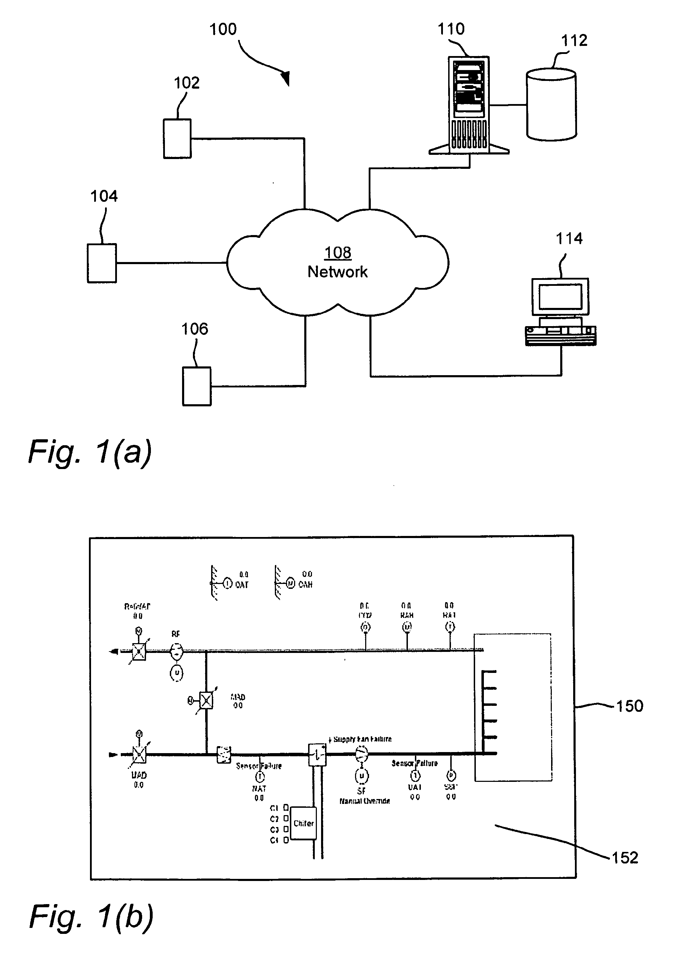

A system 100 according to embodiments is illustrated in Fig. 1(a). The system 100 will be described in an operating state. A building automation system, such as the system 100 of Fig. 1(a) may comprise a number of different building automation sub-systems, wherein each sub-system is associated with a unique functionality. Each sub-system may be associated with different locations, such as different buildings, different floors within a building or different rooms within one floor of a building, etc. The building automation system 100 may represent a combination of different functionalities and different locations.

The system 100 comprises a plurality of building control devices 102, 104, 106 which are operatively connected to a communications network 108. In general, a building automation system may comprise hundreds of building control devices. Typically the connections between the building control devices 102, 104, 106 and the network 108 are narrowband connections. Each of the building control devices 102, 104, 106 is a control device typical and common for sensing different events or parameters when controlling various sub-systems in a building control system. The building control devices 102, 104, 106 may also be denoted as field devices.

The communications network 108 may be an internal network (a so called Intranet) of a building, of a collection of buildings, of a company, of a business enterprise, or the like. The communications network 108 may also be a wide area network. The communications network 108 may be wired, wireless, or any combinations thereof.

One or more operator devices 114 is also operatively connected to the network 108. The operator device 114 may comprise an interface for user interaction. The operator device 114 may be associated with operators, such as maintenance personnel. The operator device 114 may be a computer.

A computer server 110 is also operatively connected to the communications network 108. The computer server 110 may store data pertaining to events and objects of the system 100 in a database 112. The computer server may run control programs facilitating the control of the system 100.

Communication between the computer server 110, the operator device 114 and the building control devices 102, 104, 106 is per se performed in any suitable, known manner, and includes sending various kinds of signals or messages between the devices 102, 104, 106, 110, 114 operatively connected to the network 108.

It is common to represent the system 100 and its physical components with a model of the same. The model may be computer implemented and it may be associated with a user interface, such as a user interface of the operator device 114. Fig. 1(b) is an exemplary screen view 150 (or a part thereof) of a display of a graphical user interface (GUI) providing a view of a work space 152. The work space 152 holds a part of a model of a building automation system. The model may be a model of a physical system, such as the system 100, or it may be a model of a simulation system. The model may, for example, be changed due to actual changes in the corresponding physical system 100 or due to simulation changes. The work space 152 may be provided for editing and there may be provided different panes (not shown) for tools, such as a binding tool, and functions for performing said editing.

Objects of the model may be operatively connected, or bound, by data bindings associated with data connections between binding points of the objects. In general terms a binding point may be an input, output, variable, parameter, property reference, object reference and/or the object itself. In general terms a data binding establishes a data connection between two binding points. According to embodiments the binding points are associated with signals or data representations of a physical system, which may be e.g. a building automation system in operation. However the binding points may be associated with a simulation of the system as applied e.g. during a design phase of a building automation system. The simulation may be performed by one or more computers simulating the behaviour of the system.

An object may typically be associated with a field device, a control program, or an object in a graphical view of a user interface. The objects may thus be field device objects representing field devices in the building automation system. Similarly, the objects may be control objects representing control programs of the building automation system. In additions the objects may be (graphical) user interface objects representing user interfaces of the building automation system. For example, a field device object may be arranged to receive a user settable value, wherein the value is linked to a binding point of the field device object for controlling the corresponding actual component of the field device in a physical system represented by the field device object. Graphical objects may have binding points to other objects and/or properties.

A field device objects may comprise in the order of 20 input binding points and in the order of 20 output binding points. A control object may comprise in the order of 15 input binding points and in the order of 10 output binding points. A user interface object may comprise in the order of 100 input binding points and in the order of 10 output binding points. Thus, manually connecting binding points of objects in a system comprising a plurality of objects may be both labour intensive and error-prone.

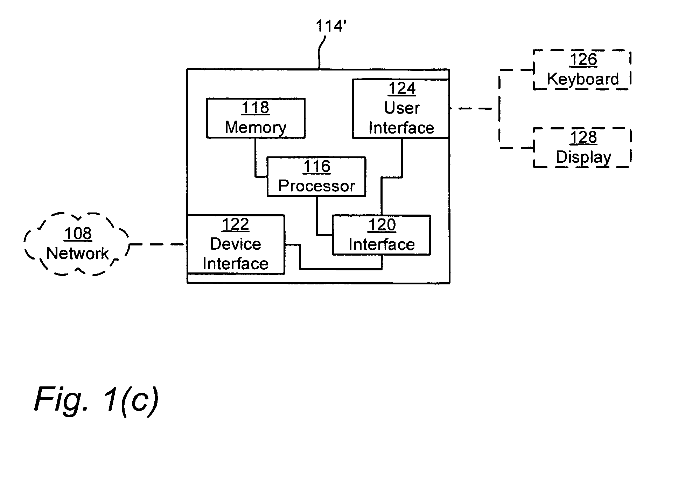

Fig. 1(c) schematically illustrates an apparatus 114' according to embodiments. The apparatus may be part of the operator device 114 of Fig. 1(a), and may comprise a processor 116, a memory 118, a general interface 120 associated with a device interface 122 to field devices (via e.g. the network 108) and a user interface 124 to operators (via e.g. a keyboard 126 and a display 128). Thereby the interfaces 120, 122, 124 may be arranged to receive control signals from, and transmit control signals to, field devices and/or operators. The memory of the apparatus may, for example, store objects, programs, binding tools - such as binding templates (these will be further disclosed below), associations between objects and field devices, control programs etc, and a model describing the circuit(s) of a building automation system. The processor may be arranged to execute one or more control programs, such as a control program associated with a method of establishing data bindings between objects in a building automation system. Such a method thus pertains to control of the physical building automation system and/or control of the model building automation system. The control programs may be linked to the binding templates. The control programs may be associated with the user interface. The user interface may be arranged to receive user input from an operator, wherein the user input pertains to manipulation of the objects, e.g. by applying a binding template to the objects.

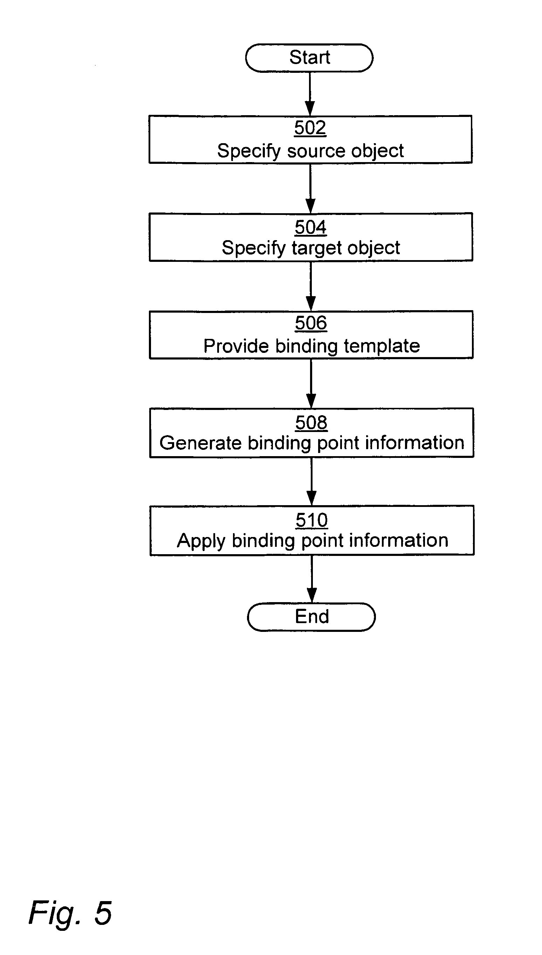

Fig. 5 is a flowchart according to embodiments of a computer implemented method of establishing data bindings between objects in a building automation system. The method, which may be implemented in the apparatus 114' of Fig. 1(c), is based on binding templates. A binding template relates to data bindings between objects in a building automation system. The binding template specifies how binding points of a first set of objects are bound to binding points of a second set of objects.

The processor 116 is configured to specify binding points of objects stored in the memory 118 by associating objects with a binding template and executing the binding template on the objects. The method thus comprises specifying a first set of binding points of the objects. Particularly a source object associated with source binding points is specified, step 502. The first set of binding points may be associated with at least one source object type of the objects. A second set of binding points of the objects may be specified. Particularly a target object associated with target binding points is specified, step 504. The second set of binding points may be associated with at least one target object type of the objects.

The processor may be configured to provide a binding template relating to data bindings between the objects. The processor may be configured to associate the binding points with the binding template. Thus, a binding template relating to data bindings between objects in the building automation system is provided, step 506. The binding template specifies how binding points of one of the at least one source object type are bound to binding points of one of the at least one target object type. Particularly the binding template specifies how the source binding points are bound to the target binding points.

The processor may be configured to extract template binding point rules from the binding template and to apply said rules to the specified binding points of the objects. According to embodiments template binding point rules are loaded by loading a binding template comprising said rules. Said rules may then be compared to properties of the objects in order to identify between which binding points of the objects data bindings should be established. Thus the binding template is utilized for establishing rules pertaining to data bindings between the binding points of a first object, denoted source object, and binding points of a second object, denoted target object, by applying the binding template on the source object and the target object. Particularly, by applying the binding template on the source object and the target object, a binding point list comprising source binding point information and target binding point information pertaining to data bindings between the source bidning points and the target binding points is generated, step 508.

As will be further disclosed below, the binding template may be based on a number of partial path matching rules. The binding template may be based on object types, or properties, of the objects to be bound. The binding template may be based on a combination of partial path matching rules and object types, or properties.

Partial paths of the binding points of the objects may be compared to path matching rules of the binding template. Types of the objects may be compared to types of the binding template. When the binding points have been identified the processor may for example compile a binding point list specifying all binding points of the objects as stipulated by the applied binding template. This binding point list may serve as a list of rules. Thereby a list of rules relating to data bindings between the specified binding points of the objects may be established.

The interface may be configured to distribute (part of) the list of rules to the objects to be bound. The rules may be distributed to the source object and the target object in the building automation system. The rules may then be are the applied to the source object and the target object. Thereby the objects may be provided with updated binding point information. Particularly, the source binding point information is applied by the source object and the target binding point information is applied by the target object in the building automation system, step 510. Thereby a data binding between the source object and the target object is established.

The data bindings may thus represent links between computer implemented objects associated with physical objects. The binding information of the binding point list may be distributed to field devices represented by the objects. The field devices may then apply binding rules stipulated by the binding point list. The field devices may then establish data communication links as specified in the provided binding information. Data communication may thus be established to other field devices, to control programs and/or to user interfaces.

As implicitly disclosed above, the steps of the method may be performed by a computer program product when executed on the processor 116 of the apparatus 114'. The computer program product may be stored on a computer-readable storage medium, such as a computer memory 118.

According to embodiments more than one binding template may be applied to the same object in a system. As an example, a first binding template may be utilized for establishing binding points between a first subset of binding points of a first object and binding points of a second object. A second binding template may then be utilized for establishing binding points between a second subset of binding points of the first object and binding points of a third object.

The second binding template may comprises the first binding template and additions thereto. The additions may relate to further specifications of how binding points of one particular source object are bound to binding points of one particular target object. For example, there may be provided a first binding template relating to establishing data bindings between a first object of type Type_A and a second object of type Type_B. A second binding template may include this first binding template and may further relate to establishing data bindings between a first object of type Type_A.11 and the second object of type Type_B, wherein type Type_A.11 is a further specification of type Type_A. For example, type Type_A may relate to a graphical object and type Type_A.11 may relate to a graphical object for temperature indication. An even further specification may be an object of type Type_A.11.2 which, for example, may relate to a graphical object for temperature indication in degrees Kelvin.

In a case two or more binding templates are consecutively applied to the same object there may be conflicting rules pertaining to the rules associated with the applied different binding templates. The rule of the latest applied binding template may hold in case of conflicting rules. Relating back to the example above, in case the first subset partly overlaps the second subset, the bindings as established by the second binding template may overwrite the overlapping part of the bindings established by the first binding template. This may cause some of the bindings established between the first object and the second object to be discarded. However, there may be situations wherein a data binding may be established between a first binding point of a first object and a binding point of a second object as well as between the first binding point of the first object and a binding point of a third object. One such example could be a case in which a binding point of a first source object is bound to the same binding point of a target object as a binding point of a second source object. In general, two or more source objects may read from the binding point of one target object, whereas one source object may only write to one target object.

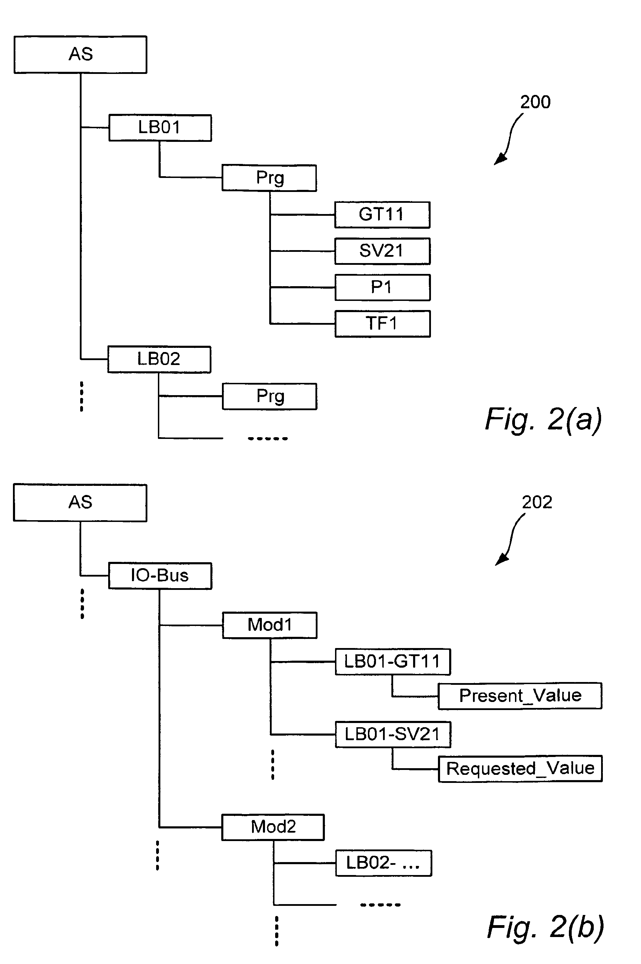

For partial path matching, the templates comprise a number of partial path matching rules. In general, a (partial) path in an object may be defined as a hierarchical (partial) path leading to a binding point of the object. A partial path may also be denoted as a path pattern. According to graph theory terms a partial path may thus be viewed as part of a path from a node to a leaf. The partial path matching rules may thus pertain to identifier paths to the binding points of the objects. The binding template may then be specified by applying the partial path matching rules by comparing and matching paths between source objects and target objects. Each path matching rule includes at least one common identifier of the source objects and the target objects. A common identifier may e.g. be a name or an address in the (partial) paths of the source objects and the target objects, respectively. The address for the binding point may be the last part (or end point) of the (partial) path leading to the binding point. Fig. 2(a) is an illustration of an object 200 comprising e.g. the binding point GT11 associated with the path AS/LB01/Prg/GT11. Thus, according to graph theory terms AS is the node and GT11 is a leaf. Fig. 2 (b) is an illustration of an object 202 comprising e.g. the binding point Present_Value associated with the path AS/IO-Bus/Mod1/LB01-GT11/Present_Value.

A rule may be defined as a pair (source object, target object) of path patterns each including at least one identifier, for example enclosed in curly brackets, "{ }", that defines which part(s) of the paths that should be equal (for the source object and the target object). Each path pattern may further comprise wildcard operators, "*", path separator operators, "/", and plain text element operators. The path separator operator may, during the path matching, be excluded from the path matching rules comprising the wildcard operator. That is, the wildcard operator may represent several stages in the partial path. For example, the path AS/LB01/Prg/GT11 may be written as AS/*/GT11, wherein the wildcard operator represents the partial path LB01/Prg. Alternatively, each wildcard operator may only represent one stage in the partial path. For example, the path AS/LB01/Prg/GT11 may then be written as AS/*/*/GT11.

There may be rules for comparing addresses for binding points. There may be rules for TGML (TAC Graphics Markup Language) to bind to Menta programs. There may be rules for Menta programs to bind to input-output buses (IO-buses). There may be rules for different types of objects. The binding template can be applied to the object regardless of the object type. If the object contains links to other objects the rules may be applied to all descending objects. Put in other words, a target object may be associated with a folder comprising a plurality of additional target objects, and the rules may be established for additional target objects contained in the folder.

Next a number of short examples illustrating partial path matching rules are provided.

Example 1: Template binding point rule 1: source pattern: {id}.PV, target pattern: {id}. Object A has the binding points P1.PV, P2.PV and P3.PV. Object B has the binding points P1, P2 and P3. Applying the template Rule 1 with object A as source and object B as target may thus create the bindings according to the binding point list:

$$A/P1.PV <-> B/P1$$

$$A/P2.PV <-> B/P2$$

$$A/P3.PV <-> B/P3,$$

where "X <-> Y" denotes that X is bound to Y.

Example 2: Template binding point rule 2: source pattern: {unit}/*/{id}, target pattern: */{unit}-{id}/Present_Value. Object 200 of Fig. 2(a) has the binding point GT11. Object 202 of Fig. 2(b) has the binding point Present_Value. Applying the template Rule 3 with object 200 as source and object 202 as target may thus create the bindings according to the binding point list:

    AS/LB01/Prg/GT11                    <->
    AS/IO-Bus/Mod1/LB01-GT11/Present_Value

AS/LB02/Prg/GT11                    <->
AS/IO-Bus/Mod2/LB02-GT11/Present_Value, assuming that LB02 of objects 200 and 202 have the binding point GT11 (not shown). It may be noted that, in general, starting wildcard and path separator operators do not need to be provided. Thus the rule {unit}/{id} may be interpreted as having the same contextual meaning as the rules */{unit}/{id} and */*/{unit}/{id}, and so on.

The type to type (or property to property) binding template is associated with a (user defined) first object type - the source type, and specifies one or more (user defined) second object types - the target types. The binding template specifies how the binding points of the source type should be bound to the binding points of the target type(s). More particularly, the binding template for binding the first object type and the second object type may be specified by specifying data bindings between binding points of the source object of the first object type and binding points of the target object of the second object type. Typical object types include field devices, control programs, and graphical objects. Each object type may be associated with a plurality of further specified object types, as exemplified above. These further specified object types may be denoted as object sub-types. When there are parameters to be specified for the binding, e.g., when binding variables are SNVTs (standard network variable types), these parameters may also be part of the binding template.

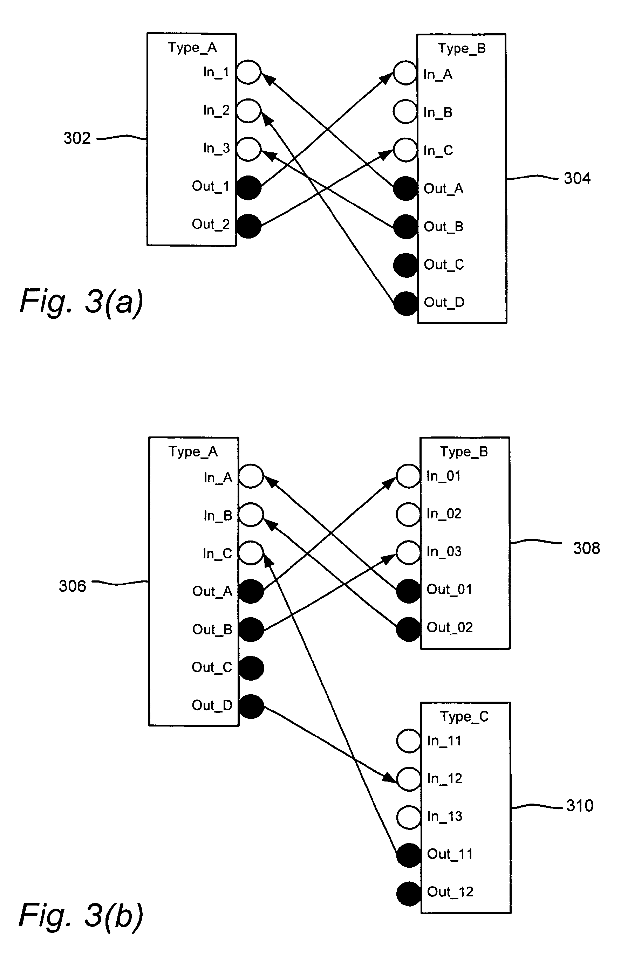

Fig. 3(a) is an illustration of objects 302, 304 and data bindings between binding points of the object 302 and the object 304. Object 302, which is of type Type_A, comprises input binding points In_1, In_2, In_3 and output binding points Out_1, Out_2; object 304, which is of type Type_B, comprises input binding points In_A, In_B, In_C and output binding points Out_A, Out_B, Out_C, Out_D. A type to type binding template Type_A <=> Type_B, where "X <=> Y" denotes a binding template between X and Y, may thus specify how (output) binding points of an object 302 of type Type_A should be bound to (input) binding points of an object 304 of type Type_B, (and/or vice versa). According to the example of Fig. 3(a) the binding template Type_A <=> Type_B of the present example specifies data bindings between objects of types Type_A and Type_B according to the binding point list:

    In_1 <-> Out_A
    In_2 <-> Out_D
    In_3 <-> Out_B
    Out_1 <-> In_A
    Out_2 <-> In_C

A binding template may not specify how all binding points of an object should be bound. For the present example binding points In_B and Out_C of object 304 of Type_B are not bound to any binding points of object 302 of Type_A.

The binding template may specify bindings between one source object and two or more target objects The source object type may be different from the target object type(s). Fig. 3(b) is an illustration of objects 306, 308, 310 and data bindings between binding points of object 306 and object 308, and between binding points of object 306 and object 310. These data bindings may be established by first applying a type to type binding template on object 306 and object 308 and then applying a type to type binding template on object 306 and object 310.

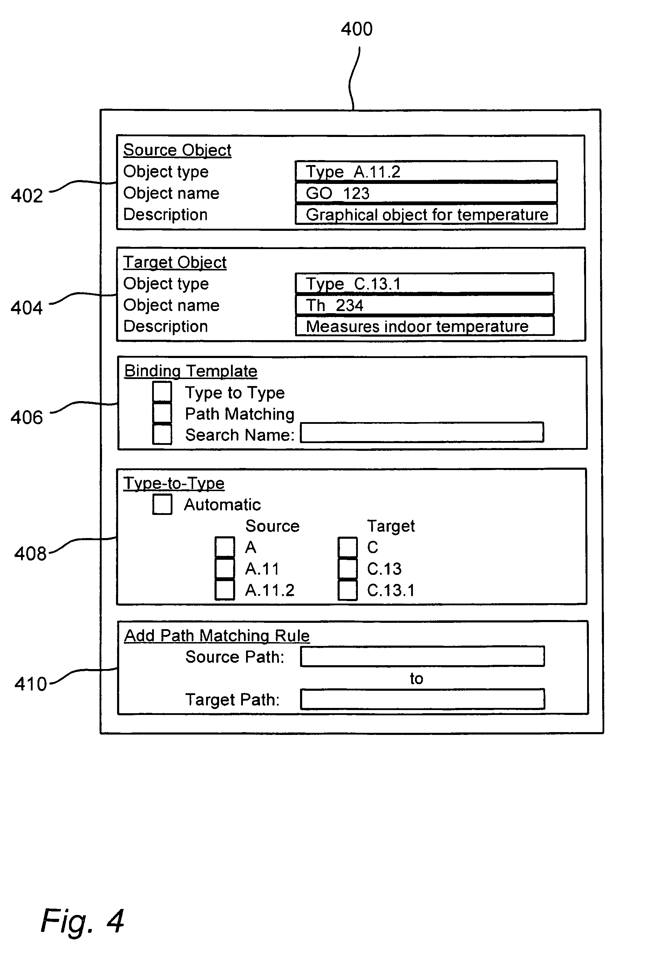

As disclosed above the binding points of a system may be listed in a binding point list. Such a binding point list may be shown to and edited by an operator. The binding template list may further show available binding templates and the binding templates defined for a particular object type of a selected object. The list may show the name and a description of the binding templates. Data bindings may be established by applying a binding template using drag-and-drop from a binding point browser to the binding templates list. Fig. 4 is an illustration of a display view 400 according to embodiments. The display view 400 may be part of a graphical user interface displayed on an operator device, such as the devices 114 and/or 114'. In general, Fig. 4 illustrates a simple example of a user interface enabling an operator to use a binding tool in form of different binding templates in order to bind objects. Interaction with the binding tool may be accomplished by a user interface. User input fields may enable an operator to input textual information. Some input fields may allow a user to perform a query relating to the entered textual information. Some input fields may be provided as drop menus. Some input fields may be provided as check boxes.

The exemplary display view 400 comprises a source object pane 402, a target object pane 404, a binding template pane 406, a type to type pane 408 and a add path matching rule pane 410. One or more of the panes 402, 404, 406, 408, 410 may be configured for user interaction. The source object pane 402 relates to properties of a source object to be bound. It comprises an input field relating to properties of the source object, such as the object type, the object name, and a description of the object. The target object pane 404 relates to properties of a target object to be bound to the source object. It comprises an input field relating to properties of the target object, such as the object type, the object name, and a description of the object. As disclosed above, the binding template may be simultaneously applied on a plurality of source object and/or target objects.

The binding template pane 406 relates to properties of the binding template to be used to bind the source object as specified in pane 402 to the target object as specified in pane 404. An operator may specify the binding template to be a type to type binding template. An operator may specify the binding template to be a path matching binding template. An operator may specify the binding template by inputting a name of the binding template.

The type to type pane 408 relates to properties of a type to type binding template. The operator may specify a type to type binding template to be automatically applied to the source object and the target object. Alternatively the operator may manually specify the source object type and/or the target object type. For the instant example the operator may, for example, specify the source object type as A.11 whereas the target object type is specified as C.13.1.

The add path matching rule pane 410 relates to properties of a path matching binding template. The operator may specify one or more additional path matching rules by providing a source path and target path of the source object and the target object to be bound. The binding template may be a combination of a type to type binding template and a path matching template. For example, an operator may first specify a type to type binding template and then add an additional path matching rule to the specified type to type binding template, thereby specifying the complete binding template to be used.

It will be appreciated that a person skilled in the art can modify the above-described embodiments in many ways and still use the advantages of the invention as shown in the embodiments above. Thus, the invention should not be limited to the shown embodiments but should only be defined by the appended claims.

## Claims

1. A computer implemented method of establishing data bindings between objects (102, 104, 106, 110, 112, 114) in a building automation system (100), comprising

   - specifying (502) a source object (302, 306) of said objects, said source object being associated with source binding points;
   - specifying (504) a target object (304, 308, 310) of said objects, said target object being associated with target binding points;
   - providing (506) a binding template relating to data bindings between said objects in said building automation system, wherein said binding template specifies how said source binding points are bound to said target binding points;
   - generating (508), by applying said binding template on said source object and said target object, a binding point list comprising source binding point information and target binding point information pertaining to data bindings between said source bidning points and said target binding points; and
   - applying (510) said source binding point information by said source object and said target binding point information by said target object in said building automation system, thereby establishing a data binding between said source object and said target object;

- **characterized in that** said binding template comprises a number of partial path matching rules pertaining to identifier paths in said source object and said target object, wherein said path matching rules comprise at least one wildcard operator, at least one path separator operator, and at least one plain text element operator, wherein said at least one path separator operator may, during said path matching, be excluded from said path matching rules comprising said at least one wildcard operator, wherein each one of said path matching rules includes at least one common identifier of said source object and said target object, and **in that** said method further comprises

- specifying said binding template by applying said number of partial path matching rules by comparing path matching between said source object and said target object by comparing addresses for said source binding points and said target binding points, wherein said partial path is associated with said address.

2. The method according to claim 1, further comprising

- denoting said binding template as a first binding template; and
- providing a second binding template, wherein at least one of said source binding points and said target binding points of said second binding template is different from said source binding points and said target binding points associated with said first binding template.

3. The method according to claim 2, wherein said second binding template comprises said first binding template and additions thereto, said additions relating to further specifications of how binding points of said source binding points are bound to binding points of said target binding points.

4. The method according to any one of claims 2 to 3, further comprising

- consecutively applying said first and second binding templates; and
- wherein in a case of a conflicting rule of said rules in said first and said second binding templates applying the rule of the latest applied binding template.

5. The method according to any one of claims 1 to 4, wherein said target object is associated with a folder comprising a plurality of additional target objects, said method further comprising

- generating said binding point list for said additional target objects in said folder.

6. The method according to any one of claims 1 to 5, further comprising

- associating each object in said building automation system with at least one object type;
- relating said source object to one of said at least one object type, denoted source object type;
- relating said target object to one of said at least one object type, denoted target object type; and
- specifying said binding template for binding said source object and said target object by specifying data bindings between binding points of said source object type and binding points of said target object type.

7. The method according to claim 6, wherein each object is associated with at least two different object types.

8. The method according to claim 6 or 7, wherein said binding template specifies bindings between one source object type and two target object types.

## Patentansprüche

1. Vom Rechner ausgeführtes Verfahren zum Einrichten von Datenverbindungen zwischen Objekten (102, 104, 106, 110, 112, 114) in einem Gebäudeautomatisierungssystem (100), das umfasst:

- Spezifizieren (502) eines Quellobjekts (302, 306) von den Objekten, wobei das Quellobjekt mit Quellverbindungspunkten verknüpft ist;
- Spezifizieren (504) eines Zielobjekts (304, 308, 310) von den Objekten, wobei das Zielobjekt mit Zielverbindungspunkten verknüpft ist;
- Bereitstellen (506) einer Verbindungsvorlage, die sich auf Datenverbindungen zwischen den Objekten in dem Gebäudeautomatisierungssystem bezieht, wobei die Verbindungsvorlage spezifiziert, wie die Quellverbindungspunkte an die Zielverbindungspunkte angebunden sind;
- Erzeugen (508) einer Verbindungspunktliste, die Quellverbindungsinformationen und Zielverbindungsinformationen enthält, welche Datenverbindungen zwischen den Quellverbindungspunkten und den Zielverbindungspunkten betreffen, indem die Verbindungsvorlage auf das Quellobjekt und das Zielobjekt angewendet wird; und
- Anwenden (510) der Quellverbindungsinformationen durch das Quellobjekt und der Zielverbindungsinformationen durch das Zielobjekt in dem Gebäudeautomatisierungssystem, wodurch eine Datenverbindung zwischen dem Quellobjekt und dem Zielobjekt eingerichtet wird;

- **dadurch gekennzeichnet, dass** die Verbindungsvorlage eine Anzahl von Teilwegabstimmungsvorschriften umfasst, die Kennzeichnungswege in dem Quellobjekt und dem Zielobjekt betreffen, wobei die Wegabstimmungsvorschriften mindestens einen Wildcard-Operator, mindestens einen Wegseparator-Operator und mindestens einen Klartextelement-Operator aufweisen, wobei der mindestens eine Wegseparator-Operator während der Wegabstimmung von den Wegabstimmungsvorschriften, die den mindestens einen Wildcard-Operator umfassen, ausgeschlossen sein kann, wobei jede der Wegabstimmungsvorschriften mindestens einen gemeinsamen Kennzeichner des Quellobjekts und des Zielobjekts enthält, und dadurch, dass das Verfahren ferner umfasst.

- Spezifizieren der Verbindungsvorlage durch Anwenden der Anzahl von Teilwegabstimmungsvorschriften durch Vergleichen der Wegabstimmung zwischen dem Quellobjekt und dem Zielobjekt, indem Adressen für die Quellverbindungspunkte und die Zielverbindungspunkte verglichen werden, wobei der Teilweg mit der Adresse verknüpft ist.

2. Verfahren nach Anspruch 1, ferner umfassend:

    - Bezeichnen der Verbindungsvorlage als eine erste Verbindungsvorlage und
    - Bereitstellen einer zweiten Verbindungsvorlage, wobei sich mindestens einer der Quellverbindungspunkte und der Zielverbindungspunkte der zweiten Verbindungsvorlage von den Quellverbindungspunkten und Zielverbindungspunkten unterscheidet, die mit der ersten Verbindungsvorlage verknüpft sind.

3. Verfahren nach Anspruch 2, wobei die zweite Verbindungsvorlage die erste Verbindungsvorlage und Ergänzungen dazu umfasst, wobei die Ergänzungen weitere Spezifikationen betreffen, wie Verbindungspunkte von den Quellverbindungspunkten an Verbindungspunkte von den Zielverbindungspunkten angebunden sind.

4. Verfahren nach einem der Ansprüche 2 bis 3, ferner umfassend:

    - fortlaufendes Anwenden der ersten und zweiten Verbindungsvorlage; und
    - wobei in einem Fall eines Vorschriftenkonflikts der Vorschriften in der ersten und zweiten Verbindungsvorlage die Vorschrift der zuletzt angewendeten Verbindungsvorlage angewendet wird.

5. Verfahren nach einem der Ansprüche 1 bis 4, wobei das Zielobjekt mit einem Ordner verknüpft ist, der mehrere zusätzliche Zielobjekte umfasst, wobei das Verfahren ferner umfasst:

    - Erzeugen der Verbindungspunktliste für die zusätzlichen Zielobjekte in dem Ordner.

6. Verfahren nach einem der Ansprüche 1 bis 5, ferner umfassend:

    - Verknüpfen eines jeden Objekts in dem Gebäudeautomatisierungssystem mit mindestens einem Objekttyp,
    - Zuordnen des Quellobjekts zu einem von dem mindestens einen Objekttyp, der als Quellobjekttyp gekennzeichnet ist;
    - Zuordnen des Zielobjekts zu einem von dem mindestens einen Objekttyp, der als Zielobjekttyp gekennzeichnet ist; und
    - Spezifizieren der Verbindungsvorlage für das Verbinden des Quellobjekts und des Zielobjekts durch Spezifizieren von Datenverbindungen zwischen Verbindungspunkten des Quellobjekttyps und Verbindungspunkten des Zielobjekttyps.

7. Verfahren nach Anspruch 6, wobei jedes Objekt mit mindestens zwei unterschiedlichen Objekttypen verknüpft ist.

8. Verfahren nach Anspruch 6 oder 7, wobei die Verbindungsvorlage Verbindungen zwischen einem Quellobjekttyp und zwei Zielobjekttypen spezifiziert.

**Revendications**

1. Procédé mis en oeuvre par ordinateur pour établir des liaisons de données entre des objets (102, 104, 106, 110, 112, 114) dans un système d'automatisation de bâtiment (100), comprenant :

    - la spécification (502) d'un objet de source (302, 306) desdits objets, ledit objet de source étant associé à des points de liaison de source ;
    - la spécification (504) d'un objet de cible (304, 308, 310) desdits objets, ledit objet de cible étant associé à des points de liaison de cible ;
    - la fourniture (506) d'un modèle de liaison relatif à des liaisons de données entre lesdits objets dans ledit système d'automatisation de bâtiment, dans lequel ledit modèle de liaison spécifie comment lesdits points de liaison de source sont liés aux dits points de liaison de cible ;

- la génération (508), par l'application dudit modèle de liaison au dit objet de source et au dit objet de cible, d'une liste de points de liaison comprenant des informations de points de liaison de source et des informations de point de liaison de cible concernant des liaisons de données entre lesdits points de liaison de source et lesdits points de liaison de cible ; et
- l'application (510) desdites informations de points de liaison de source par ledit objet de source et desdites informations de points de liaison de cible par ledit objet de cible dans ledit système d'automatisation de bâtiment, en établissant de ce fait une liaison de données entre ledit objet de source et ledit objet de cible ;
- **caractérisé en ce que** ledit modèle de liaison comprend un nombre de règles de correspondance de voies partielles concernant des voies d'identification dans ledit objet de source et dans ledit objet de cible, dans lequel lesdites règles de correspondance de voies comprennent au moins un opérateur générique, au moins un opérateur de séparateur de voies et au moins un opérateur d'élément en texte clair, dans lequel ledit au moins un opérateur de séparateur de voies peut, au cours de ladite correspondance de voies, être exclu desdites règles de correspondance de voies comprenant ledit au moins un opérateur générique, dans lequel chacune desdites règles de correspondance de voies comprend au moins un identifiant commun dudit objet de source et dudit objet de cible, et **en ce que** ledit procédé comprend en outre :
- la spécification dudit modèle de liaison par l'application dudit nombre de règles de correspondance de voies partielles par la comparaison de correspondance de voies entre ledit objet de source et ledit objet de cible par la comparaison d'adresses pour lesdits points de liaison de source et lesdits points de liaison de cible, dans lequel ladite voie partielle est associée à ladite adresse.

2. Procédé selon la revendication 1, comprenant en outre :

   - la dénotation dudit modèle de liaison en tant que premier modèle de liaison ; et
   - la fourniture d'un deuxième modèle de liaison, dans lequel au moins l'un desdits points de liaison de source et des points de liaison de cible dudit deuxième modèle de liaison est différent desdits points de liaison de source et desdits points de liaison de cible associés au dit premier modèle de liaison.

3. Procédé selon la revendication 2, dans lequel ledit deuxième modèle de liaison comprend ledit premier modèle de liaison et des ajouts qui lui sont apportés, lesdits ajouts concernant d'autres spécifications de comment des points de liaison desdits points de liaison de source sont liés à des points de liaison desdits points de liaison de cible.

4. Procédé selon l'une quelconque des revendications 2 et 3, comprenant en outre :

   - l'application consécutive desdits premier et deuxième modèles de liaison ; et
   - dans lequel, en cas de conflit entre lesdites règles desdits premier et deuxième modèles de liaison, l'application de la règle du modèle de liaison appliqué le plus récemment.

5. Procédé selon l'une quelconque des revendications 1 à 4, dans lequel ledit objet de cible est associé à un dossier comprenant une pluralité d'objets de cible supplémentaires, ledit procédé comprenant en outre :

   - la génération de ladite liste de points de liaison pour lesdits objets de cible supplémentaires dans ledit dossier.

6. Procédé selon l'une quelconque des revendications 1 à 5, comprenant en outre :

   - l'association de chaque objet dans ledit système d'automatisation de bâtiment à au moins un type d'objet ;
   - la mise en relation dudit objet de source avec l'un dudit au moins un type d'objet, dénoté en tant que type d'objet de source ;
   - la mise en relation dudit objet de cible avec l'un dudit au moins un type d'objet, dénoté en tant que type d'objet de cible ; et
   - la spécification dudit modèle de liaison pour lier ledit objet de source et ledit objet de cible par la spécification de liaisons de données entre des points de liaison dudit type d'objet de source et des points de liaison dudit type d'objet de cible.

7. Procédé selon la revendication 6, dans lequel chaque objet est associé à au moins deux types d'objets différents.

8. Procédé selon la revendication 6 ou 7, dans lequel ledit modèle de liaison spécifie des liaisons entre un type d'objet de source et deux types d'objet de cible.

## Fig. 1(a)

## Fig. 1(b)

114'

126
Keyboard

124
User
Interface

118
Memory

128
Display

116
Processor

108
Network

122
Device
Interface

120
Interface

*Fig. 1(c)*

*Fig. 2(a)*

*Fig. 2(b)*

*Fig. 3(a)*

*Fig. 3(b)*

400

**Source Object**

| | |
|---|---|
| Object type | Type_A.11.2 |
| Object name | GO_123 |
| Description | Graphical object for temperature |

402

**Target Object**

| | |
|---|---|
| Object type | Type_C.13.1 |
| Object name | Th_234 |
| Description | Measures indoor temperature |

404

**Binding Template**

☐ Type to Type
☐ Path Matching
☐ Search Name: [_____]

406

**Type-to-Type**

☐ Automatic

| Source | Target |
|---|---|
| ☐ A | ☐ C |
| ☐ A.11 | ☐ C.13 |
| ☐ A.11.2 | ☐ C.13.1 |

408

**Add Path Matching Rule**

Source Path: [_____]

to

Target Path: [_____]

410

*Fig. 4*

```
                    ┌─────────────┐
                    │    Start    │
                    └──────┬──────┘
                           │
                           ▼
              ┌────────────────────────────┐
              │            502             │
              │     Specify source object  │
              └──────────────┬─────────────┘
                             │
                             ▼
              ┌────────────────────────────┐
              │            504             │
              │     Specify target object  │
              └──────────────┬─────────────┘
                             │
                             ▼
              ┌────────────────────────────┐
              │            506             │
              │    Provide binding template│
              └──────────────┬─────────────┘
                             │
                             ▼
              ┌──────────────────────────────────┐
              │              508                 │
              │  Generate binding point information│
              └──────────────┬───────────────────┘
                             │
                             ▼
              ┌──────────────────────────────────┐
              │              510                 │
              │   Apply binding point information │
              └──────────────┬───────────────────┘
                             │
                             ▼
                    ┌─────────────┐
                    │     End     │
                    └─────────────┘
```

*Fig. 5*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5978753 A
- WO 0125860 A1

- WO 0182072 A1